# EUROPÄISCHE PATENTSCHRIFT

(11) **EP 0 950 913 B1**
(45) Veröffentlichungstag und Bekanntmachung des Hinweises auf die Patenterteilung: **08.12.2004**
(21) Anmeldenummer: 99105348.9
(22) Anmeldetag: 16.03.1999
(51) Int. Cl.: G02B 27/01

(54) **Vorrichtung zur Verbesserung des Kontrastes in einem Head-Up-Display in einem Kraftfahrzeug**
Arrangement for improving contrast in a head-up display of an automotive vehicle
Dispositif pour améliorer le contraste d'un affichage "tête haute" dans un véhicule à moteur

(30) Priorität: 15.04.1998 DE 19816647
(43) Veröffentlichungstag der Anmeldung: 20.10.1999
(73) Patentinhaber: DaimlerChrysler AG, 70567 Stuttgart (DE)
(72) Erfinder: Zink, Oliver, 82266 Inning (DE)

(56) Entgegenhaltungen:
- DE-A- 4 116 043
- DE-A- 4 242 797
- FR-A- 2 552 397
- US-A- 4 999 011
- US-H- H1 109
- PATENT ABSTRACTS OF JAPAN vol. 015, no. 225 (M-1122), 10. Juni 1991 (1991-06-10) -& JP 03 067730 A (NIPPONDENSO CO LTD), 22. März 1991 (1991-03-22)
- PATENT ABSTRACTS OF JAPAN vol. 1997, no. 07, 31. Juli 1997 (1997-07-31) -& JP 09 086225 A (FUJITSU TEN LTD), 31. März 1997 (1997-03-31)
- PATENT ABSTRACTS OF JAPAN vol. 1995, no. 02, 31. März 1995 (1995-03-31) -& JP 06 316264 A (TOSHIBA CORP;OTHERS: 01), 15. November 1994 (1994-11-15)

## Beschreibung

Die vorliegende Erfindung betrifft eine Vorrichtung zur Verbesserung des Kontrastes in einem Head-Up-Display in einem Kraftfahrzeug nach dem Oberbegriff der Patentansprüche 1 und 2.

Head-Up-Displays sind als System zur Anzeige von Informationen bekannt. Anfänglich wurden diese Systeme vorwiegend im Bereich der Luftfahrttechnik eingesetzt, um einem Piloten Informationen über den Betriebszustand des Flugzeuges anzeigen zu können. Derartige Head-Up-Displays erzeugen ein Bild der angezeigten Informationen, das von dem Flugzeugführer unmittelbar in dessen Sichtfeld erkannt werden kann. Es ist also nicht notwendig, zum Ablesen der Informationen den Blick von der Umgebung weg auf Instrumententafeln zu richten. Seit einiger Zeit ist es auch im Bereich der Kraftfahrzeugtechnik bekannt, derartige Systeme einzusetzen. Über ein optisches System werden Bilder der anzuzeigenden Informationen im Sichtfeld des Fahrzeugführers erzeugt.

Probleme können auftreten, wenn eine große Umgebungshelligkeit vorliegt. Aufgrund des dann geringeren Kontrastes der angezeigten Informationen zum Hintergrund kann die Erkennbarkeit und Ablesbarkeit der angezeigten Informationen erschwert sein. Es ist bekannt (SAE-Paper 920600, S. 21 bis 27, insbesondere S. 25) zur Vermeidung dieses Problems die Helligkeit der angezeigten Informationen in Abhängigkeit von der Umgebungshelligkeit zu verändern. Beispielsweise werden bei Sonneneinstrahlung die Informationen heller angezeigt als bei Dunkelheit.

Weiterhin wird in der DE 41 16 043 C2 auf eine japanische Gebrauchsmusterveröffentlichung hingewiesen, die die Nummer 02-58284 trägt und deren Offenbarung derart dargestellt wird, daß dort ein Teilbereich der Windschutzscheibe dunkel getönt ist, wobei mittels eines Head-Up Displays angezeigte Informationen in dem Bereich sichtbar sind, in dem die Windschutzscheibe abgedunkelt ist. Diese Abdunklung kann erfolgen, indem die Windschutzscheibe gefärbt wird oder indem ein entsprechender Film eingebracht wird. Die Windschutzscheibe ist also vom Fahrzeugführer aus betrachtet in einem bestimmten Raumwinkel dunkel getönt. Mittels eines Head-Up-Displays angezeigte Informationen sind für den Fahrzeugführer in diesem bestimmten Raumwinkel sichtbar.

Aus der DE 42 42 797 C2 ist es bekannt, Informationen mittels einer Hologrammplatte in Aufsicht darzustellen. Dabei soll zur Verbesserung des Kontrastes die Rückseite des Hologrammes dunkel eingefärbt sein.

In der JP 09 086 225 A wird ein Head-Up Display beschrieben, bei dem zwei verschiedene Bilder horizontal nebeneinander angezeigt werden.

In der US H1109 H wird ein Head-Up Display in einem Fahrzeug beschrieben, bei dem zur Verbesserung des Kontrastes die Anzeigefläche auf der Windschutzscheibe getönt wird.

Es ist Aufgabe der vorliegenden Erfindung, die Erkennbarkeit wichtiger Informationen, die mittels eines Head-Up-Displays angezeigt werden, zu verbessern.

Erfindungsgemäß wird diese Aufgabe durch eine Vorrichtung nach Anspruch 1 gelöst, wonach wichtige Informationen in dem bestimmten Raumwinkel sichtbar sind, wobei andere Informationen in Geradeausrichtung sichtbar sind.

Dabei erweist es sich als vorteilhaft, daß die Informationen für den Fahrzeugführer immer an derselben Stelle sichtbar sind. Bei den wichtigen Informationen wie beispielsweise der aktuellen Fahrzeuggeschwindigkeit ist aufgrund der Anzeige vor dem abgedunkelten Hintergrund sichergestellt, daß diese weitestgehend unabhängig von den Lichtverhältnissen ablesbar sind.

Vorzugsweise werden bei der Vorrichtung nach Anspruch 1 die durch das Head-Up-Display angezeigten Informationen für den Fahrzeugführer in Geradeausrichtung angezeigt, wobei wichtige Informationen wie die Geschwindigkeit o.ä. im unteren, dunklen Bereich der Windschutzscheibe (Bereich 3) und eher unwichtige Informationen wie Minimalabstand, Navigationshinweise o.ä. im oberen Feld (Bereich 4) angezeigt werden.

Dadurch kann der Fahrzeugführer bei normalen Umgebungsleuchtdichten die Informationen in beiden Windschutzscheibenbereichen erkennen. Nimmt die Umgebungsleuchtdichte zu, so kann der Fahrzeugführer zwar die eher unwichtigen Informationen in seinem unmittelbaren Blickfeld nicht mehr erkennen, die wichtigen Informationen im unteren Anzeigebereich sind aber nach wie vor gut ablesbar.

Der bestimmte Raumwinkel, in dem die Windschutzscheibe abgedunkelt ist, liegt außerhalb des üblichen Sichtfeldes des Fahrzeugführers, das dieser beim Führen eines Kraftfahrzeuges üblicherweise einsehen muß. Gegenüber anderen üblichen Anzeigevorrichtungen mittels eines in das Armaturenbrett integrierten Kombiinstruments ergibt sich als Vorteil, daß der Fahrzeugführer die Blickrichtung nur um einen kleineren Winkel verändern muß, um die Informationen erkennen zu können. Weiterhin wird durch die Verwendung des Head-Up-Displays der Vorteil beibehalten, daß die Sichtentfernung des beim Beobachten der Umgebung bei der Führung eines Kraftfahrzeuges üblicherweise auf unendlich akkomodierten Auges kaum verändert werden muß. Dennoch ist bei den angezeigten Informationen ein hinreichender Kontrast zum Hintergrund gegeben, so daß die Informationen jederzeit gut erkennbar sind.

Die im letztgenannten Absatz genannten Vorteile gelten auch bei der Vorrichtung nach Anspruch 2, wobei weiterhin wichtige Informationen für den Fahrzeugführer zusätzlich in dem Bereich anßerhalb des bestimmten Raumwinkels sichtbar sind.

Dadurch können bei normalem Umgebungslicht die Informationen für den Fahrzeugführer akkomodationsfrei im üblichen Gesichtsfeld angezeigt werden. Wenn sich die Lichtverhältnisse so ändern, daß die Informationen aufgrund eines fehlenden Kontrastes mit der Umgebungshelligkeit nicht oder nur schwer erkennbar sind, kann der Fahrzeugführer die Informationen in dem bestimmten Raumwinkel mit hinreichendem Kontrast erkennen.

Vorteilhaft zeigt sich bei den beiden Vorrichtungen nach Anspruch 1 oder 2, daß die flächenmäßige Ausdehnung des dunklen Bereichs der Windschutzscheibe begrenzt ist. Die Erkennbarkeit wichtiger Informationen ist weitestgehend unabhängig von den Lichtverhältnissen sichergestellt. Gleichzeitig ist bei beiden Ausführungsformen die Möglichkeit gegeben, eine Vielzahl von Informationen anzeigbar zu machen.

Bei der Vorrichtung nach Anspruch 3 ist die Windschutzscheibe vom Fahrzeugführer aus gesehen geradeaus im unteren Bereich der Windschutzscheibe dunkel getönt.

Dieser Bereich erweist sich insofern als geeignet als der Fahrzeugführer die Informationen durch ein einfaches Absenken des Blickes erkennen kann, wobei dieser Bereich beim Führen eines Kraftfahrzeuges üblicherweise nicht eingesehen werden muß.

Bei der Vorrichtung nach Anspruch 4 wird der Bereich der Windschutzscheibe getönt, indem mittels Drucktechnik die Tönung auf die Windschutzscheibe aufgedruckt wird.

Diese Herstellungsweise ist bekannt und wird bereits eingesetzt, um an Windschutzscheiben von Kraftfahrzeugen im oberen Bereich einen abgedunkelten Streifen zu erzeugen. Vorteilhaft kann mittels dieser Herstellungsweise die Windschutzscheibe in dem entsprechenden Bereich dunkel getönt werden.

Bei der Vorrichtung nach Anspruch 5 wird der Bereich der Windschutzscheibe getönt, indem der Inlayer in dem entsprechenden Bereich getönt wird.

Die den Inlayer bildende Folie kann ebenfalls vergleichsweise einfach in einem bestimmten Bereich getönt werden.

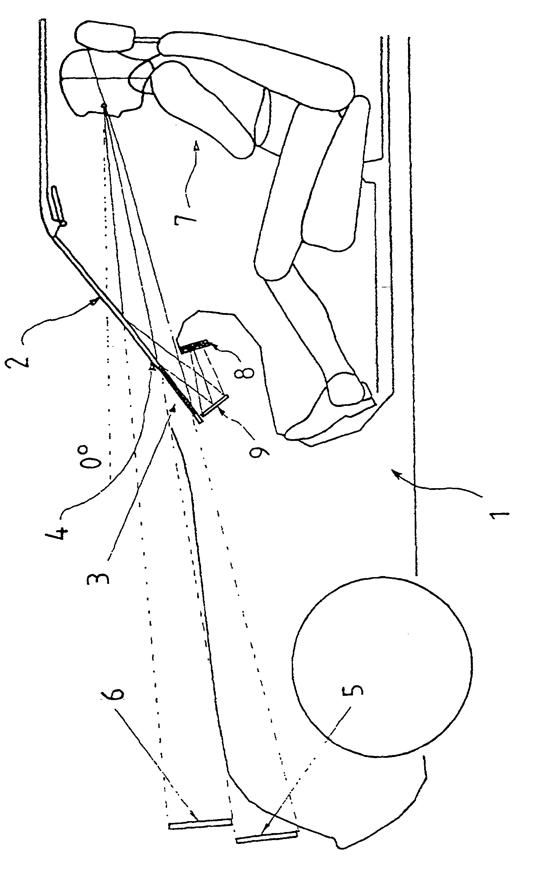

In der einzigen Figur ist ein Ausführungsbeispiel der vorliegenden Erfindung näher dargestellt. Die Figur zeigt ein Kraftfahrzeug 1 mit einer Windschutzscheibe 2. Diese Windschutzscheibe 2 weist einen dunkel getönten Bereich 3 auf.

Weiterhin ist eine Anzeigevorrichtung zu sehen, die aus einer Bilderzeugungsvorrichtung 8 sowie einem Spiegel 9 besteht. Mittels dieser Anzeigevorrichtung werden dem Fahrzeugführer 7 Informationen als Head-Up-Display angezeigt. In der Figur ist die Blickrichtung "geradeaus" des Fahrzeugführers mit 0° gekennzeichnet. Weiterhin sind Bereiche 3 und 4 der Windschutzscheibe dargestellt, in denen der Fahrzeugführer 7 die mittels des Head-Up-Displays angezeigten Informationen wahrnehmen kann.

Der Bereich 4 bildet mit der Blickrichtung "geradeaus" nur einen relativ kleinen Winkel, so daß dieser Bereich eventuell mit eingesehen werden kann oder zumindest mit einer minimalen Kopfbewegung einsehbar wird. Durch den Bereich 4 der Windschutzscheibe 2 sind die nicht so wichtigen Informationen 6 für den Fahrzeugführer 7 sichtbar.

Weiterhin ist ein dunkel getönter Bereich 3 in der Windschutzscheibe 2 vorhanden. Durch diesen dunkel getönten Bereich 2 kann der Fahrzeugführer 7 in dem bestimmten Raumwinkel Informationen 5 wahrnehmen, die vorzugsweise wichtige Informationen wie beispielsweise die aktuelle Fahrzeuggeschwindigkeit sind. Durch die dunkle Tönung des Bereiches 3 ist bezüglich der Anzeige dieser Informationen immer ein solcher Kontrast gewährleistet, daß diese Informationen 5 erkennbar sind.

Außer der gezeigten Aufteilung der Informationen ist es auch möglich, alle Informationen im Raumwinkel des Bereiches 4 der Windschutzscheibe 2 sichtbar zu machen und die wichtigsten Informationen nochmals im Raumwinkel des Bereiches 3 der Windschutzscheibe 2.

Die dunkle Tönung kann realisiert sein, indem diese Tönung an der entsprechenden Stelle auf die Windschutzscheibe aufgedruckt wird. Weiterhin ist möglich, die den Inlayer bildende Folie an der entsprechenden Stelle einzufärben.

Es hat sich als vorteilhaft erwiesen, den Bereich 3 der Windschutzscheibe 2, der dem bestimmten Raumwinkel zugeordnet ist, unterhalb des üblichen Sichtfeldes des Fahrzeugführers 7 anzuordnen. Es ist dann möglich, mit einer minimalen Kopfbewegung die Informationen abzulesen.

## Patentansprüche

1. Vorrichtung zur Verbesserung des Kontrastes der Anzeige eines Head-Up-Displays in einem Kraftfahrzeug, wobei die Windschutzscheibe (2) vom Fahrzeugführer (7) aus betrachtet in einem bestimmten Raumwinkel dunkel getönt ist (3) und wobei mittels eines Head-Up-Displays angezeigte Informationen (5) für den Fahrzeugführer (7) in diesem bestimmten Raumwinkel sichtbar sind,
**dadurch gekennzeichnet,**
**daß** die flächenmäßige Ausdehnung des dunklen Bereichs (3) der Windschutzscheibe auf den bestimmten Raumwinkel (3) begrenzt ist,
**daß** die Windschutzscheibe (2) einen Bereich (4) außerhalb des bestimmten Raumwinkels aufweist, in dem mittels eines Head-Up-Displays angezeigte Informationen (6) für den Fahrzeugführer (7) sichtbar sind,
**daß** wichtige Informationen (5) in dem bestimmten Raumwinkel (3) sichtbar sind, und
**daß** andere Informationen (6) in dem Bereich (4) außerhalb des bestimmten Raumwinkels sichtbar sind.

2. Vorrichtung nach Anspruch 1,
**dadurch gekennzeichnet, daß** die wichtigen Informationen (5) zusätzlich in dem Bereich (4) außerhalb des bestimmten Raumwinkels sichtbar sind.

3. Vorrichtung nach Anspruch 1 oder 2,
**dadurch gekennzeichnet, daß** die Windschutzscheibe (2) vom Fahrzeugführer (7) aus gesehen geradeaus im unteren Bereich (3) der Windschutzscheibe (7) dunkel getönt ist.

4. Vorrichtung nach einem der Ansprüche 1 bis 3,
**dadurch gekennzeichnet, daß** der Bereich (3) der Windschutzscheibe (2) getönt wird, indem mittels Drucktechnik die Tönung auf den Bereich (3) der Windschutzscheibe (2) aufgedruckt wird.

5. Vorrichtung nach einem der Ansprüche 1 bis 3,
**dadurch gekennzeichnet, daß** der Bereich (3) der Windschutzscheibe (2) getönt wird, indem der Inlayer in dem entsprechenden Bereich (3) getönt wird.

## Claims

1. Device for improving the contrast of the indication of a head-up display in a motor vehicle wherein the windscreen (2) as seen by the driver of the vehicle (7) is tinted dark (3) in a certain solid angle and wherein information (5) indicated by means of a head-up display is visible to the driver of the vehicle (7) in this certain solid angle,
**characterised in that**
the measured area expansion of the dark area (3) of the windscreen is limited to the certain solid angle (3),
the windscreen (2) has an area (4) outside of the certain solid angle, in which information (6) indicated by means of a head-up display is visible to the driver (7),
important information (5) is visible in the certain solid angle (3) and
other information (6) is visible in the area (4) outside of the certain solid angle.

2. Device according to claim 1
**characterised in that** the important information (5) is additionally visible in the area (4) outside of the determined solid angle.

3. Device according to claim 1 or 2
**characterised in that** the windscreen (2) as seen straight ahead by the driver of the vehicle (7) is tinted dark in the lower area (3) of the windscreen (7) [sic].

4. Device according to one of the claims 1 to 3
**characterised in that**
the area of the windscreen (2) is tinted **in that** by means of pressing technology the tinting is pressed onto the area (3) of the windscreen (2).

5. Device according to one of the claims 1 to 3
**characterised in that** the area (3) of the windscreen (2) is tinted **in that** the inlayer is tinted in the corresponding area (3).

## Revendications

1. Dispositif pour améliorer le contraste d'un affichage "tête haute" dans un véhicule à moteur, dans lequel la vitre de pare-brise (2), vue du conducteur du véhicule (7), est foncée dans un certain angle (3) et dans lequel des informations (5) indiquées au moyen d'un affichage "tête haute" sont visibles dans ce certain angle pour le conducteur du véhicule (7), **caractérisé en ce que** l'étendue en surface de la zone foncée (3) de la vitre de pare-brise est limitée au certain angle (3), **en ce que** la vitre de pare-brise (2) présente en dehors du certain angle une zone (4), dans laquelle des informations (6) indiquées au moyen d'un affichage "tête haute" sont visibles pour le conducteur du véhicule (7), **en ce que** des informations importantes (5) sont visibles dans le certain angle (3) et **en ce que** d'autres informations (6) sont visibles dans la zone (4) située en dehors du certain angle.

2. Dispositif selon la revendication 1, **caractérisé en ce que** les informations importantes (5) sont visibles en plus dans la zone (4) en dehors du certain angle.

3. Dispositif selon la revendication 1 ou 2, **caractérisé en ce que** la vitre de pare-brise (2) est, vue du conducteur du véhicule (7), foncée en ligne droite dans la zone inférieure (3) de la vitre de pare-brise (7).

4. Dispositif selon l'une quelconque des revendications 1 à 3, **caractérisé en ce que** la zone (3) de la vitre de pare-brise (2) est foncée en appliquant la tonalité sur la zone (3) de la vitre de pare-brise (2) à l'aide d'une technique d'impression.

5. Dispositif selon l'une quelconque des revendications 1 à 3, **caractérisé en ce que** la zone (3) de la vitre de pare-brise (2) est foncée en colorant le inlayer dans la zone correspondante (3).
